(19) Europäisches Patentamt
European Patent Office
Office européen des brevets

(11) **EP 0 996 851 B1**

(12) **EUROPEAN PATENT SPECIFICATION**

(45) Date of publication and mention
of the grant of the patent:
**15.08.2007 Bulletin 2007/33**

(51) Int Cl.:
*G01N 1/10* (2006.01)   *G01N 1/20* (2006.01)

(21) Application number: **98925682.1**

(86) International application number:
**PCT/FI1998/000519**

(22) Date of filing: **16.06.1998**

(87) International publication number:
**WO 1999/000656 (07.01.1999 Gazette 1999/01)**

(54) **AUTOMATIC SAMPLING AND TREATMENT SYSTEM**

AUTOMATISCHES SYSTEM ZUR PROBENENTNAHME UND -BEHANDLUNG

SYSTEME AUTOMATIQUE D'ECHANTILLONNAGE ET DE TRAITEMENT

(84) Designated Contracting States:
**AT BE CH CY DE DK ES FI FR GB GR IE IT LI LU MC NL PT SE**

(30) Priority: **17.06.1997  FI  972574**

(43) Date of publication of application:
**03.05.2000 Bulletin 2000/18**

(73) Proprietor: **Neste Oil Oyj
06101 Porvoo (FI)**

(72) Inventors:
• **TOLVANEN, Ilkka
FIN-06100 Porvoo (FI)**
• **WALDVOGEL, Jürg
FIN-06450 Porvoo (FI)**
• **PILVIÖ, Olli
FIN-01150 Söderkulla (FI)**

(74) Representative: **Hakkila, Maini Annika et al
Forssén & Salomaa Oy
Lautatarhankatu 8 B
00580 Helsinki (FI)**

(56) References cited:
**WO-A-91/14932       GB-A- 2 164 021
GB-A- 2 170 909       GB-A- 2 206 408
US-A- 5 275 786**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to an automatic sampling and treatment system comprising a sampling loop connected on-line to a process to receive a sample stream from a stream being processed in the process, and further, connected to an analyser to convey the sample stream from the sampling loop to the analyser.

Continuously operating analysers are used in the chemical industry for quality control to determine concentrations or other important quality criteria from the process streams desired. One of the most important features of these on-line analysers influencing the performance thereof is a sampling system that functions properly.

In the petroleum refining, dark and heavy, high boiling crude oil fractions and mixtures thereof are formed, and thereafter, used as starting materials to produce bitumen and heavy fuel oil. The poor solubility or the precipitation of asphaltenes contained in these refined oil products impedes the application and storage thereof. The tendency of the asphaltenes to precipitate determines the stability, or the storability of these oil products, this tendency depending on the process, and the starting materials used in the production. Particularly the thermal cracking used at present influences the tendency of the asphaltenes to precipitate. In the thermal cracking unit, the crude oil refining process is controlled in such a way that the heavy fuel oil obtained from the bottom of the unit were stable.

Traditionally, the stability of oil products is determined from samples taken with the so-called flocculation method, among others (for instance, the Shell method; Flocculation ratio of bitumen and fuel oil). The method is based on the paper chromatography, and the visual evaluation of the chromatograms. With this method it takes 0,5-6 hours to obtain the results.

Automatic on-line analysers have also been developed, the function thereof being for instance the monitoring of the asphaltene content of the oil product, either directly from the production process, or by analysing the samples in a laboratory.

In case of an automatic on-line analyser, a process analyser controlled by a computer: automatically takes a sample from the product stream desired, produces a parameter characterising the stabilility, and sends it to the control unit of the process at predetermined intervals, for instance every 10 minutes.

US 5,275,786 discloses an analyzer system for improving quality of a reaction product and for maintaining a liquid sample at an elevated temperature in order to prevent precipitation of titratable species. In operation the liquid sample to be analyzed is withdrawn from a reactor and maintained at reactor temperature while being diluted in a closed loop pathway including a pump. After that the diluted sample is cooled and passed to an autotitrator.

Furthermore, WO 91/14932 discloses a sampling device for withdrawal of liquid samples from a process. The device comprises lines for intake of a sample and for returning it to the process after analysis of the sample. The sampling device also comprises a pump and three-way valves for controlling flow of the sample in the sampling device.

The object of the present invention is to improve the systems known at present.

This object is achieved by an automatic sampling and treatment system according to claim 1.

The functioning of the sampling and treatment system according to the invention, used as a part of a continuously operating analyser, is based on the constant volume sampling known as such, the said system also allowing, however, the treatment of the sample for analysis. The sampling and treatment system of the invention takes from a process of a production plant a liquid sample with a predetermined volume, and carries out the treatment, including the agitation and the precipitation of the sample taken.

According to a preferable embodiment of the invention a precipitating solvent is continuously added to a closed liquid circuit, and accordingly, a respective amount of liquid is removed from this closed circuit, this liquid flowing to the detector that detects the precipitation as the sudden increase (the turning point) of the intensity of the scattered (reflected) light. The parameter (p value, stability) illustrating the tendency to precipitate is calculated from the quantities of the solvents and oil products.

An oil sample with a constant volume is necessary for the calculation of the parameter illustrating the tendency to precipitate, determined by the relative amounts of the oil, the precipitating solvent (a straight-chain hydrocarbon, such as a heptane, pentane, cetane, octane, etc.), and possibly a solvent (xylene, toluene, or another aromatic compound).

In the system according to the present invention the mixing during the treatment of the sample is almost ideal, and is accomplished with a (gear) pump. In the precipitation step, the treatment of the liquid is characterized by the continuous feeding of the precipitating agent (such as heptane) into the mixing loop with a constant volume, as well as by the flow of the liquid volume being displaced through the detector (i.e. the detection of the degree of precipitation). The mixing loop is equipped with elements that make the mixing more efficient, and includes a (gear) pump.

The equation for the degree of precipitation is:

$$Q_t = Q_0 \left(1 - e^{-t\,F_h/V_0}\right)$$

where

$Q_t$ = concentration of the precipitating agent (e.g. heptane)

$Q_0$ = final concentration
$t$ = time
$V_0$ = volume of the sample loop
$F_h$ = flow of the precipitating agent (e.g. heptane)

The above equation may for instance be used for the precise determination of the concentration of the liquid in the sample loop when the concentration measured by the detector is known.

The automatic sampling and treatment system of the present invention is accompanied with several significant advantages. The sampling, and the treatment of the sample are accomplished in a closed space which is particularly important when handling inflammable or toxic substances. The treated liquid is automatically removed from the sample loop, and recycled to the process during the next sampling step, thus reducing the amount of waste and the need to wash the loop. The sampling, and the treatment of the sample are not influenced by the pressure of the process, or pressure variations therein. The sampling, and the treatment of the sample may be automatized easily. The flow to the analyser may be precisely adjusted within a wide range. The reagent used is consumed only in amounts necessary for the treatment.

The sampling and treatment system of the present invention is especially suitable for the automatic sampling from the process flow of heavy fuel oil, for an on-line analyser.

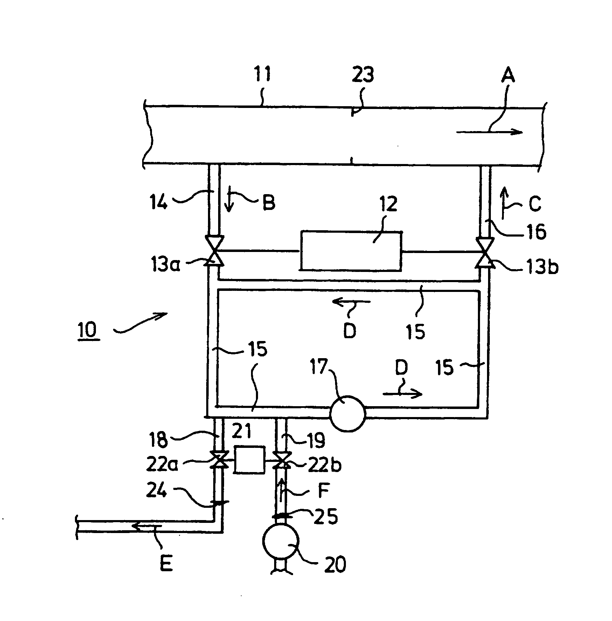

The invention is now illustrated with reference to the figure of the appended drawing, showing the principle of the invention, naturally without intending to limit the invention exclusively thereto.

The figure of the drawing shows a preferable embodiment of the sampling and treatment system of the invention as a schematic flow chart.

In the figure of the drawing, the automatic sampling and treatment system of the invention is generally referred to with the numeral 10. The liquid being processed flows in the direction of the arrow A in the process 11. The automatic sampling and treatment system 10 is connected with a first conduit 14, and with a second conduit 16 to the process 11. The conduit 14 is adapted with a valve 13a, and the conduit 16 is adapted with a valve 13b. Preferably, the valves 13a, 13b form a pair of two-way valves that are actuated coincidently. An actuator 12 is adapted to control the valves 13a, 13b. Further, the sampling and treatment system 10 comprises a sampling loop 15. The sample stream flows in the direction of the arrow B from the process 11 through the conduit 14 into the sampling loop 15. The sampling loop 15 is equipped with a pump 17. In the sampling loop 15 the sample flows in the direction of the arrow D. In the next sampling step, the treated liquid is automatically removed from the sampling loop 15 through the conduit 16 as the stream C back into the process 11.

The sample stream leaves the sampling loop 15, through a conduit 18 as the stream E towards the analyser. An additive is fed through a conduit 19 into the sampling loop 15. The additive is fed with a pump 20. The conduit 18 comprises a valve 22a, and the conduit 19 comprises a valve 22b. An actuator 21 is adapted to control the valves 22a, 22b. Preferably the valves 22a, 22b form a pair of two-way valves that are actuated coincidently. The additive flow through the conduit 19 is illustrated with the arrow F.

Preferably, in the embodiment shown in this figure the process 11 comprises a flow resistance, in this case a throttling baffle 23. The conduit 18 leading to the analyser comprises a pressure reducer 24 to prevent excessive liquid from leaking from the sampling loop 15, thus assuring the reliable performance of the sampling and treatment system of the invention. The conduit 19 to convey the additive comprises a return valve 25.

The operation of the automatic sampling and treatment system 10 according to the invention is as follows. During sampling, the actuator 12 first opens the sampling loop 15, the liquid from the process stream desired thus displacing the liquid already present in the sampling loop 15. This is facilitated by a pressure difference caused by restricting the flow in the process 11 with a flow resistance, e.g. with a throttling baffle 23, or a separate pump in the sample line (not shown). Also the pump 17 assists in filling the sample loop 15.

At the beginning of the sample treatment, the actuator 12 closes the valves 13a, 13b, that is, it closes the connection between the sampling loop 15, and the process 11. Then, the actuator 21 opens the valves 22a, 22b, thus allowing the additive to flow into the sample loop 15 through the conduit 19. During the sampling and the sample treatment, the sample is effectively circulated by the pump 17 in the sampling loop 15. The additive is fed by the pump 20 into the sampling loop 15 where the mixing is almost ideal. The additive feed displaces a respective amount of liquid that now flows towards the analyser through the conduit 18. The feeding of this precipitating additive is continued until the parameter characterizing the tendency to precipitate is reached. Thereafter, the actuator 21 closes the valves 22a, 22b, and the actuator 12 opens the valves 13a, 13b to allow the sampling loop 15 to receive a new sample. The treated liquid in the sampling loop 15 is automatically removed through the conduit 16 and recycled to the process during the next sampling step, thus reducing the amount of waste being formed and the need to rinse the loop. The flow to the analyser may be precisely adjusted within a wide range with the aid of the pump 20. The reagent fed with the pump 20 is consumed only in amounts necessary for the treatment.

Only the principle of the present invention is presented above, and it is evident to the person skilled in the art that several modifications are possible within the scope of the invention defined in the appended claims.

## Claims

1. Automatic sampling and treatment system (10) for sampling and treating a sample of a liquid oil product, comprising

   - a sampling loop (15) arranged to be connected on-line to a process (11) of producing the liquid oil product for receiving a sample from a stream (A) of the process (11), and further arranged to receive an additive for treating the sample, and to convey a treated sample to an analyser,
   - a first conduit (14) connected to the sampling loop (15), for receiving the sample from the process (11), the first conduit (14) being provided with a valve (13a),
   - a third conduit (18) connected to the sampling loop (15), for conveying the treated sample to the analyser, the third conduit (18) being provided with a valve (22a),
   - a fourth conduit (19) connected to the sampling loop (15), for feeding the additive to the sampling loop, the fourth conduit (19) being provided with a valve (22b) and a pump (20),
   - a first actuator (12) being arranged to open and close the valve (13a) in the first conduit (14), and
   - a second actuator (21) being arranged to open and close the valve (22a) in the third conduit (18), and the valve (22b) in the fourth conduit (19), wherein

   the automatic sampling and treatment system (10) further comprises a second conduit (16) connected to the sampling loop (15), for returning the treated sample to the process (11), the second conduit (16) being provided with a valve (13b), which is arranged to be opened and closed by the first actuator (12), and wherein the sampling loop (15) forms a closed sampling loop containing a constant volume of the sample when the valves (13a, 13b, 22a, 22b) are closed, and the automatic sampling and treatment system (10) further comprises a pump (17) being arranged in the sampling loop (15) with the constant volume for circulating the sample in the sampling loop and mixing the additive, which is a liquid precipitating additive, with the sample before analyzing.

2. The automatic sampling and treatment system according to claim 1, **characterized in that** the actuators are arranged to control the valves such that the treated sample stream leaves the sampling loop (15) through the second conduit (16) towards the process (11) during the next sampling step.

3. The automatic sampling and treatment system according to claim 1 or 2, **characterized in that** the third conduit (18) leading to the analyser is equipped with a pressure reducer (24).

4. The automatic sampling and treatment system according to any of the above claims 1-3, **characterized in that** the conduit (19) for feeding the additive is equipped with a return valve (25).

5. The automatic sampling and treatment system according to any of the above claims 1-4, **characterized in that** the valves (13a, 13b) in the first and second conduits (14, 16), as well as the valves (22a, 22b) in the third and fourth conduits (18, 19) are respectively two-way valves.

## Patentansprüche

1. Automatisches Probenentnahme- und Behandlungssystem (10) zur Entnahme und Behandlung einer Probe eines flüssigen Öl-produkts, das aufweist

   - einen Probenentnahmekreislauf (15), der eingerichtet ist, prozeßgekoppelt mit einem Prozeß (11) zur Herstellung des flüssigen Ölprodukts zum Erhalten einer Probe aus einem Strom (A) des Prozesses (11) verbunden zu werden, und ferner eingerichtet ist, ein Additiv zur Behandlung der Probe zu erhalten, und eine behandelte Probe zu einem Analysator zu befördern,
   - einen ersten Kanal (14), der mit dem Probenentnahmekreislauf (15) zum Erhalten der Probe aus dem Prozeß (11) verbunden ist, wobei der erste Kanal (14) mit einem Ventil (13a) versehen ist,
   - einen dritten Kanal (18), der mit dem Probenentnahmekreislauf (15) zum Befördern der behandelten Probe zum Analysator verbunden ist, wobei der dritte Kanal (18) mit einem Ventil (22a) versehen ist,
   - einen vierten Kanal (19), der mit dem Probenentnahmekreislauf (15) zum Zuführen des Additivs zum Probenentnahmekreislauf verbunden ist, wobei der vierte Kanal (19) mit einem Ventil (22b) und einer Pumpe (20) versehen ist,
   - ein erstes Betätigungselement (12), das eingerichtet ist, das Ventil (13a) im ersten Kanal (14) zu öffnen und zu schließen, und
   - ein zweites Betätigungselement (21), das eingerichtet ist, das Ventil (22a) im dritten Kanal (18) und das Ventil (22b) im vierten Kanal (19) zu öffnen und zu schließen, wobei

   das automatische Probenentnahme- und Behandlungssystem (10) ferner einen zweiten Kanal (16) aufweist, der mit dem Probenentnahmekreislauf (15) zum Rückführen der behandelten Probe in den Prozeß (11) verbunden ist, wobei der zweite Kanal (16) mit einem Ventil (13b) versehen ist, das eingerichtet ist, durch das erste Betätigungselement (12) geöffnet und geschlossen zu werden, und wobei der Probenentnahmekreislauf (15) einen geschlossenen Probenentnahmekreislauf bildet, der ein konstantes Volumen der Probe enthält, wenn die Ventile (13a, 13b, 22a, 22b) geschlossen sind, und das automatische Probenentnahme- und Behandlungssystem (10) ferner eine Pumpe (17) aufweist, die im Probenentnahmekreislauf (15) mit dem konstanten Volumen zum Umwälzen der Probe im Probenentnahmekreislauf und Mischen des Additivs, das ein flüssiges Fällungsadditiv ist, mit der Probe vor dem Analysieren angeordnet ist.

**2.** Automatisches Probenentnahme- und Behandlungssystem nach Anspruch 1, **dadurch gekennzeichnet, daß** die Betätigungselemente eingerichtet sind, die Ventile so zu steuern, daß der behandelte Probenstrom während des nächsten Probenentnahmeschrittes den Probenentnahmekreislauf (15) durch den zweiten Kanal (16) zum Prozeß (11) hin verläßt.

**3.** Automatisches Probenentnahme- und Behandlungssystem nach Anspruch 1 oder 2, **dadurch gekennzeichnet, daß** der dritte Kanal (18), der zum Analysator führt, mit einem Druckminderer (24) ausgestattet ist.

**4.** Automatisches Probenentnahme- und Behandlungssystem nach einem der vorhergehenden Ansprüche 1-3, **dadurch gekennzeichnet, daß** der Kanal (19) zum Zuführen des Additivs mit einem Rückschlagventil (25) ausgestattet ist.

**5.** Automatisches Probenentnahme- und Behandlungssystem nach einem der vorhergehenden Ansprüche 1-4, **dadurch gekennzeichnet, daß** die Ventile (13a, 13b) in den ersten und zweiten Kanälen (14, 16) sowie die Ventile (22a, 22b) in den dritten und vierten Kanälen (18, 19) jeweils Durchgangsventile sind.

## Revendications

**1.** Système d'échantillonnage et de traitement automatique (10) pour échantillonner et traiter un échantillon de produit de pétrole liquide, comprenant :

- une boucle d'échantillonnage (15) disposée de façon à être raccordée en ligne avec un processus (11) de production du produit de pétrole liquide pour recevoir un échantillon à partir d'un courant (A) du processus (11) et disposée, de plus, pour recevoir un additif pour traiter l'échantillon et pour acheminer un échantillon traité à un analyseur,

- un premier conduit (14) raccordé à la boucle d'échantillonnage (15) pour recevoir l'échantillon à partir du procédé (11), le premier conduit (14) étant muni d'une soupape (13a),

- un troisième conduit (18) raccordé à la boucle d'échantillonnage (15) pour acheminer l'échantillon traité à l'analyseur, le troisième conduit (18) étant muni d'une soupape (22a),

- un quatrième conduit (19) raccordé à la boucle d'échantillonnage (15) pour acheminer le produit additif à la boucle d'échantillonnage, le quatrième conduit (19) étant muni d'une soupape (22b) et d'une pompe (20),

- un premier organe d'actionnement (12) étant apte à ouvrir et à fermer la soupape (13a) dans le premier conduit (14), et

- un second organe d'actionnement (21) étant apte à ouvrir et à fermer la soupape (22a) dans le troisième conduit (18) et la soupape (22b) dans le quatrième conduit (19), dans lequel le système d'échantillonnage et de traitement automatique (10) comprend, de plus, un second conduit (16) raccordé à la boucle d'échantillonnage (15), pour renvoyer l'échantillon traité au procédé (11), le second conduit (16) étant muni d'une soupape (13b) qui est apte à être ouverte et fermée par le premier organe d'actionnement (12), et dans lequel la boucle d'échantillonnage (15) forme une boucle d'échantillonnage fermée contenant un volume constant de l'échantillon lorsque les soupapes (13a, 13b, 22a, 22b) sont fermées, et le système de traitement et d'échantillonnage automatique (10) comprend, de plus, une pompe (17) disposée dans la boucle d'échantillonnage (15) avec le volume constant pour la circulation de l'échantillon dans la boucle d'échantillonnage et le mélange de l'additif, qui est un additif de précipitation liquide avec l'échantillon avant l'analyse.

**2.** Système de traitement et d'échantillonnage automatique selon la revendication 1, **caractérisé en ce que** les organes d'actionnement sont aptes à commander les soupapes, de telle sorte que le courant d'échantillon traité quitte la boucle d'échantillonnage (15) par le second conduit (16) vers le procédé (11) pendant l'étape d'échantillonnage suivante.

**3.** Système de traitement et d'échantillonnage automatique selon la revendication 1 ou 2, **caractérisé en ce que** le troisième conduit (18) menant à l'analyseur est équipé d'un réducteur de pression (24).

**4.** Système de traitement et d'échantillonnage automatique selon l'une quelconque des revendications précédentes 1-3, **caractérisé en ce que** le conduit (19) pour acheminer le produit additif est équipé d'une soupape de retour (25).

5. Système de traitement et d'échantillonnage automatique selon l'une quelconque des revendications précédentes 1-4, **caractérisé en ce que** les soupapes (13a, 13b) dans les premier et second conduits (14, 16), ainsi que les soupapes (22a, 22b) dans les troisième et quatrième conduits (18, 19) sont respectivement des soupapes à deux voies.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5275786 A

- WO 9114932 A